Europäisches Patentamt

(19) European Patent Office

Office européen des brevets

(11) Numéro de publication: **0 022 399**
**B1**

(12) **FASCICULE DE BREVET EUROPEEN**

(45) Date de publication du fascicule du brevet: **25.05.83**

(51) Int. Cl.³: **E 02 B 15/04**

(21) Numéro de dépôt: **80400962.9**

(22) Date de dépôt: **26.06.80**

(54) **Barrage vertical à mise à l'eau instantanée et à développement immédiat permettant de faire écran ou d'encercler une nappe d'huile ou d'hydrocarbure répandue à la surface de l'eau.**

(30) Priorité: **29.06.79 FR 7917298**

(43) Date de publication de la demande:
**14.01.81 Bulletin 81/2**

(45) Mention de la délivrance du brevet:
**25.05.83 Bulletin 83/21**

(84) Etats contractants désignés:
**BE DE FR GB IT NL SE**

(56) Documents cités:
**DE - A - 1 953 587**
**FR - A - 987 479**
**FR - A - 2 078 638**
**FR - A - 2 101 606**
**FR - A - 2 131 723**
**FR - A - 2 161 242**
**FR - A - 2 226 852**
**NL - A - 7 008 188**
**US - A - 3 783 622**

(73) Titulaire: **Grall, Henri**
**Les Cinq Chemins Route de Sucé**
**F-44470 Carquefou (FR)**

(72) Inventeur: **Grall, Henri**
**Les Cinq Chemins Route de Sucé**
**F-44470 Carquefou (FR)**

(74) Mandataire: **Phélip, Bruno et al,**
**c/o Cabinet Harlé & Phélip 21, rue de La Rochefoucauld**
**F-75009 Paris (FR)**

Courier Press, Leamington Spa, England.

## Barrage vertical à mise à l'eau instantanée et à développement immédiat permettant de faire écran ou d'encercler une nappe d'huile ou d'hydrocarbure répandue à la surface de l'eau

La présente invention concerne les dispositifs permettant de faire écran ou d'encercler une nappe d'hydrocarbure se répandant sur l'eau.

Parmi les causes de pollution accidentelles des eaux-mers, fleuves ou rivières- les hydrocarbures entrent dans la plupart des cas. Le trafic de plus en plus intensif des tankers multiplie les risques. D'autres incidents tels que les avaries survenant aux pipes lines, la destruction de plates-formes de forage et surtout le ballastage des navires pétroliers à proximité de côtes contribuent également à la pollution des eaux. Le pétrole, ainsi déversé vers les rivages, constitue une véritable marée noire qui s'étale en surface au fur et à mesure que son épaisseur décroit avec l'accéleration d'une progression géométrique pour ne cesser que lorsque l'épaisseur est réduite à une fraction de millimètre. Les moyens d'intervention doivent donc être mis en oeuvre avec le maximum de célérité. Les méthodes utilisées consistent soit dans l'emploi de produits dispersants qui coulent l'hydrocarbure, soit dans l'emploi de procédés liants permettant de le rassembler pour ensuite essayer de le récuperer. La méthode actuellement retenue comme devant être la plus efficace est celle qui consiste à intercepter la nappe de mazout au moyen der barrages et à séparer immédiatement les deux éléments, mazout et eau. Les barrages sont généralement constitués d'une jupe lestée maintenue voisine de la verticale en conjugation avec une réserve de flottabilité constituée soit d'une série de blocs en matériau de faible densité tel que le polystyrène expansé logés dans des poches ou alvéoles de la jupe, soit d'une ceinture gonflable en matériau souple, soit d'une ceinture de caissons en matériau rigide, aluminium par exemple. Ces diverses réalisations présentent de nombreux inconvénients, entre autres celui de déterminer un volume encombrant en position de stockage limitant la longueur de chaque portion de barrage et rendant son transport et sa manutention difficiles au moment de la mise à flot. Dans le cas d'une réserve de flottabilité gonflable, cette mise à flot doit être accompagnée d'une opération de gonflage automatique, donc onéreuse. En outre, la mise en oeuvre est difficile et délicate surtout par temps moyen, et enfin, l'operation terminée, la récupération est longue et les recharges de gaz sont onéreuses. Mais les inconvénients majeurs que présentent ces différents procédés sont les suivants: trop grande flottabilité du barrage, risques de destruction par mauvaise mer, et importante prise au vent et au courant. Ces barrages sont très sensibles aux vagues, ils suivent avec la même amplitude les mouvements de la mer.

On a proposé, dans la demande de brevet FR—A—2.078.638 un barrage dont les flotteurs sont constitués par des éléments verticaux fixés sur la jupe et de préférence comportant une partie plus lourde que l'eau à leur base et une partie plus légère que l'eau à leur sommet. Ces éléments verticaux sont solidaires de la jupe sur laquelle ils peuvent être fixés par soudure, collage ou couture et leur longueur correspond de préférence à la hauteur de la jupe. Une telle réalisation permet le stockage sous la forme d'un cylindre obtenu par enroulement en spirale, mais elle présente l'inconvénient que, lors d'un remorquage du barrage après sa mise à l'eau, il oppose une grande résistance à l'avancement du fait de sa forme qui présente, en vue de dessus, une série de creux et de saillies. Il ne peut donc être remorqué qu'à une vitesse très faible et qui est limitée par la résistance de la jupe à l'arrachement; en effet, c'est celle-ci qui transmet les efforts de traction aux flotteurs.

Un autre inconvénient des barrages selon ce brevet est que leurs flotteurs étaient de hauteur analogue à celle de la jupe. En principe, la hauteur de la jupe n'aurait pas à dépasser celle des vagues; or celle-ci est réduite par la présence du mazout lui-même sur un des côtés du barrage, et si, de l'autre côté une vague vient déferler et projeter de l'eau au-dessus du barrage, cela est sans gravité. Si la jupe était de hauteur aussi réduite qu'on vient de le dire, comme les flotteurs sont de hauteur analogue, l'ensemble aurait une inertie faible dans le sens vertical et risquerait d'être affecté de mouvements d'oscillation qui le rendraient inefficaces. On est donc obligé de prévoir une jupe plus haute que nécessaire pour éviter cet inconvénient, d'où un poids et un coût plus éleves.

Le brevet FR—A—2.161.242 décrit une structure de barrage très analogue, la principale différence étant que la jupe est constituée de deux nappes de tissus collées selon des lignes verticales, les flotteurs verticaux étant logés entre les deux nappes, là où elles sont écartées les unes des autres. Ce système présente les mêmes inconvénients que le précédent. Toutefois, pour réduire les mouvements verticaux, on a prévu des cloches ouvertes vers le bas, qui freinent les mouvements de descente à partir du moment où elles attaquent le niveau de l'eau. Ce dispositif, pour être efficace doit être très robuste, donc lourd et coûteux.

On a aussi proposé dans les demandes de brevet DE—A—1.953.587 et FR—A—2.101.606 de relier entre eux certains points d'une jupe par des cables de longueur un peu plus courte que celle de la partie de jupe comprise entre les points d'attache du cable, la jupe étant par ailleurs munie de flotteurs de type classique. On augmente la résistance à la traction de l'ensemble pour un remorquage, mais le stockage devient un problème extrêmement ardu en raison du risque d'emmêlement des cables.

Le dispositif, ou barrage, suivant l'invention permet d'éviter ces inconvénients. A l'aide de celui-ci il est en effet possible d'intervenir très rapidement dès la détection d'une pollution et de largeur par mer ou par air des longueurs importantes d'éléments de barrage, lesquels, sitôt en contact avec les flots prennent la position verticale, sans aucun risque d'emmêlement en cours de largage, lesdits éléments de barrage présentant une parfaite stabilité verticale, due à une grande inertie aux déplacements verticaux sous l'action des vagues. L'invention vise également à éviter le débordement de la nappe de mazout par dessus le barrage sous l'action d'une houle importante sur ladite nappe.

L'invention fournit donc un barrage vertical destiné à arrêter ou déplacer une nappe d'hydrocarbure flottant sur l'eau et comportant une jupe en matériau souple reliée à des flotteurs allongés munis d'un lest à une de leurs extrémités de façon à flotter verticalement dans l'eau et à maintenir la jupe dans une position verticale qui présente la particularité que les flotteurs sont reliés les uns aux autres par un moyen de liaison souple, indépendant de la jupe et qui, lors d'un remorquage, est tendu alors que la jupe ne l'est pas. Dans un barrage ainsi conçu, tous les efforts de traction au remorquage sont supportés par les flotteurs et les moyens de liaison souples, si bien que la jupe ne subit que des efforts réduits, et peut être plus légère, alors que la vitesse maximale de remorquage est considérablement relevée.

De préférence, le moyen de liaison souple comprend deux cables situés respectivement en partie haute et basse du flotteur, les points de fixation du moyen de liaison sur les flotteurs sont à une distance des extrémités du flotteur au moins égale à la distance séparant deux flotteurs voisins, et le moyen de liaison souple comprend en outre au moins un croisillon en cables. Cette modalité permet de s'opposer efficacement à la fois au balancement des flotteurs autour d'un axe horizontal, qui ferait subir à la jupe un mouvement d'accordéon, et à leurs oscillations verticales qui feraient subir à la jupe des torsions dans son plan. Cependant la position des points de fixation des cables évite leur emmêlement lors du repliage ou du dépliage du barrage.

De préférence aussi, le flotteur est équipé d'un volet de stabilisation capable de prendre, sous l'effet de son poids, une position de repos où il est replié contre le flotteur pour permettre le pliage et, sous une poussée de l'eau, une position active où il est à peu près horizontal et où il s'oppose à un déplacement vertical du flotteur par rapport à l'eau. Cette modalité augmente encore la stabilité verticale des flotteurs sans gêner le repliage du barrage, qui peut être plié soit en accordéon soit en rouleau suivant un volume très réduit.

Avantageusement, le flotteur est relié à la jupe par des moyens qui permettent le passage de l'eau entre le flotteur et la jupe lors d'un remorquage. De cette façon, la résistance au remorquage est réduite par rapport à celle d'un barrage où les flotteurs sont fixés directement sur la jupe. En outre les effets des vagues sont atténués.

Il est également préférable que les flotteurs dépassant notablement vers le bas le bord inférieur de la jupe et les flotteurs dépassent vers le haut le bord supérieur de la jupe. Un flotteur de grande longueur peut être de diamètre réduit tout en ayant la même flottabilité qu'un flotteur moins haut, mais plus large. On peut ainsi plier le barrage dans un volume, par exemple cylindrique, de section réduite.

La partie supérieure du flotteur, au-dessus de la jupe, constitue une réserve de flottabilité pour le cas de fortes vagues. La partie inférieure du floteur présente, il est vrai, l'inconvénient de limiter son emploi dans les zones voisines des côtes à cause du risque d'échouage, mais cela est en accord avec les tendances actuelles de recueillir les hydrocarbures le plus vite possible et le plus au large possible, ce qui est facilité par la structure même du barrage, selon l'invention, qui est conçu en vue d'interventions rapides. Un autre avantage du flotteur de grande longueur est sa grande résistance aux oscillations autour d'un axe horizontal, en particulier les oscillations autour d'un axe parallèle à la direction du barrage, qui se produisent lorsqu'on déplace celui-ci en le tirant par les deux extrémités, à la façon d'un filet de pêche, et qui sont particulièrement génantes avec les dispositifs de l'art antérieur.

Le barrage, objet de l'invention, est constitué d'une jupe en toile disposée sur des tubes verticaux lestés à la partie inférieure et régulièrement espacés. Ces tubes sont reliés entre eux en partie haute et basse au moyen de liaisons souples, câbles, filins ou tous autres moyens de ce genre. La jupe est positionée en hauteur de façon que la partie immergée ou tirant d'eau soit supérieure à la partie en surface ou tirant d'air, ceci afin de limiter au maximum la prise au vent. Le tirant d'air n'a nullement besoin d'être important, l'eau passant éventuellement par dessus le barrage crevant ou déferlant sur la nappe de mazout. Le principe de fonctionnement du barrage est basé essentiellement sur l'inertie de la masse des tubes lestés à une extrémité et plongés verticalement donc avec peu de surface portante; chaque tube ne réagit de façon appréciable à la mer, à la poussée verticale, que si cette poussée se prolonge; or, au moment où le tube va commencer à réagir, l'eau se dérobe sur une partie de sa hauteur et dans le sens contraire au mouvement amorcé par le tube. Il en résulte une bonne stabilité verticale. Plus la longueur du tube et sa masse sont importantes, moindre est sa réaction et meillure est son inertie. Le corps flottant, mazout, gas-oil ou tout autre hydrocarbure, contenu dans l'enceinte que constitue le barrage, présente une

surface calme par rapport à l'élément extérieur. Sa viscosité présente l'avantage d'une adhérence sur la paroi interne de la jupe, ce qui contribue encore à obtenir une meilleure stabilité et une plus grande souplesse dans un mouvement ondulatoire sur la longueur du barrage. Dans le cas où une poussée trop importante de l'eau sous la nappe de mazout se fait sentir, chaque tube possède en sa partie supérieure un volet situé dans le tirant d'air et s'ouvrant sous la montée du flot, son ouverture étant limitée à un angle de 90°; sa fermeture automatique, de par son simple poids, vers le bas est également limitée à un angle d'environ 15° avec la verticale et ce afin de pouvoir réagir immédiatement à chaque remontée du mazout. Cette disposition annule l'intertie du tube évitant ainsi un débordement du mazout par dessus la jupe.

Les dessins annexés illustrent, à titre d'exemple, un mode de réalisation du dispositif conforme à la présente invention. Ceux-ci représentent:

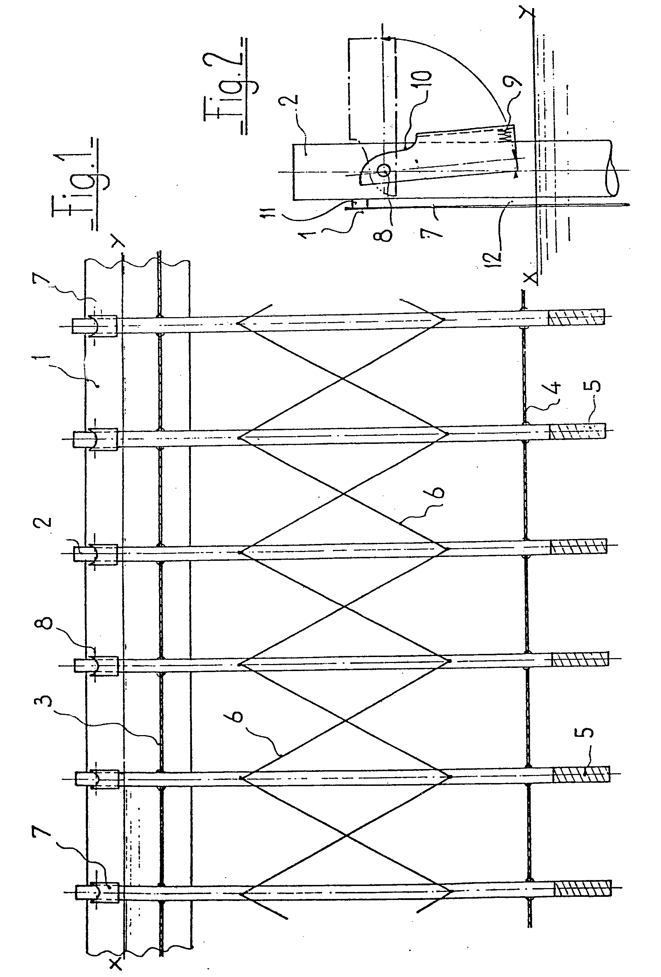

— en figure 1, une partielle en élévation d'une portion de barrage,
— en figure 2, une vue du détail d'un volet équipant la partie supérieure de chaque tube.

Tel que représenté, le dispositif se compose d'une bande de toile ou jupe 1 disposée à la partie supérieure d'une série de tubes 2 répartis à intervalles réguliers sur un organe de liaison souple 3 tel que câble, filin, chaîne ou autre disposé en partie haute, lequel organe de liaison, au moment de sa mise en tension sous l'effet d'une traction au cours d'un remorquage ou par le simple effet des courants, ne doit agir que sur les tubes et non sur la jupe. Une seconde liaison 4 disposée en partie basse assure le parallélisme des tubes en conjugation avec la liaison supérieure 3. Chaque tube 2, foncé d'un façon étanche en partie supérieure et inférieure, reçoit en partie basse un lest 5 rendu solidaire du tube afin d'éviter tout déplacement à l'intérieur de celui-ci, la masse duquel lest est déterminée de façon à ce que la partie du tube en surface ou tirant d'air soit limitée au maximum afin de réduire la prise au vent; une telle disposition donnant au tube le minimum de flottabilité engendre chez celui-ci une grande inertie à réagir au mouvement ondulant de la mer, le tube restant sensiblement indifférent au mouvement ascendant et descendant de l'eau sur ses parois. Cette inertie est d'autant plus accentuée que le rapport diamètre/longueur du tube est d'autant plus petit. L'intérieur des tubes peut être garni d'un produit de faible densité tel que le polystyrène expansé par exemple, afin d'éviter le remplissage des tubes en eau à la suite d'une avarie. La fixation de la toile constituant la jupe 1 sur les tubes 2 doit être telle que la partie immergée ou tirant d'eau soit nettement supérieure à la partie située en surface ou tirant d'air, ceci pour diminuer la prise au vent et assurer une bonne verticalité du barrage ainsi constitué. La toile ne doit pas être tendue entre les tubes; seules les liaisons 3 et 4 doivent se tendre. La stabilité verticale du barrage est également obtenue par l'adhérence du mazout sur la face interne de la jupe en vertu de sa viscosité, cette dernière déterminant d'autre part une surface calme à l'intérieur du barrage. La figure 1 illustre approximativement les proportions des tirants d'air et d'eau des tubes et de la jupe en référence à la ligne de flottaison matérialisée en xy. On constate que les flotteurs dépassent la jupe vers le bas d'environ 4 fois la hauteur de celle-ci, et vers le haut d'environ 0,1 fois cette hauteur. Les points de fixation des moyens de liaison 3 et 4 sur les tubes 2 doivent se situer par rapport aux extrémités des tubes à une distance au moins égale à la distance séparant lesdits tubes. Les distances de fixation peuvent être réduites à condition de compléter la liaison entre les tubes au moyen d'un croisillon 6 en filin souple. Celui-ci a pour but de maintenir les tubes au mieux sur un même niveau: il permet également d'éviter l'emmêlement des liaisons 3 et 4 avec les extrémités des tubes. Sous une poussée trop importante de la mer sous la nappe de mazout et pour éviter un débordement de celui-ci par-dessus la jupe, il est prévu l'ouverture en partie haute du tube d'un volet 7 sous lequel s'appuie le mazout de façon à entraîner la jupe dans son soulèvement afin de conserver la même position relative du barrage et de la nappe. Ce volet situé dans le tirant d'air de la jupe doit être prévu escamotable soit par encastrement, soit en épousant la forme extérieure du tube. La figure 2 illustre à titre d'exemple non limitatif un mode de réalisation de ce volet réalisé à partir d'une portion de tube dont le diamètre intérieur est légèrement supérieur au diamètre extérieur du tube lesté 2 et monté pivotant autour d'un axe horizontal 8 traversant ledit tube. En position repos, le volet est maintenu préalablement décollé du tube 2 d'environ 15° grâce à un ressort de compression 9 interposé entre le volet et le tube en partie basse de la zone de recouvrement: cette position de pré-ouverture facilite l'amorce de rotation du volet dès la remontée du mazout, laquelle rotation est toutefois limitée à la mise en position horizontale du volet; à cet effet, celui-ci comporte une découpe 10 permettant cette rotation et sa mise en butée sur le tube 2 en position relevée maximum. La surface totale présentée par l'ensemble des volets frontalement à l'action de soulèvement de la nappe de mazout sous l'effet d'une houle importante crée ainsi une liaison par obstacle de la nappe et des tubes et par conséquent du barrage tout entier en annulant l'effet d'inertie des tubes.

La figure 2 montre également l'une des attaches 11 qui relient la jupe 1 au flotteur 2 en laissant entre ces éléments un espace libre 12 pour le passage de l'eau.

Un élément de barrage tel que décrit se plie sous un volume restreint, soit par pliage en accordéon, soit en fagot, soit par enroulement par exemple par un touret. A titre indicatif, pour un élément de barrage comportant 400 tubes de 150 mm de diamètre, le volume relativement léger réalisé par pliage présente une section de base d'environ 3 mètres sur 3 mètres. Si les tubes composant ce barrage sont espacés par exemple de 2,50 mètres, le barrage obtenu atteint la longueur de 1000 mètres. Le largage du barrage peut s'effectuer par tous moyens à partir d'un navire, par simple basculement.

Les extrémités de chaque élément de barrage comportent un dispositif de verrouillage de tout type habituellement utilisé pour réaliser la jonction des deux extrémités d'un même élément pour encercler une nappe par exemple, ou la mise bout à bout de plusieurs éléments pour faire écran au déplacement d'un nappe sous la poussée des vents ou des courants. Chaque élément doit comporter à chaque extrémité un pan de jupe afin d'assurer un recouvrement dans la zone de jonction.

L'invention ne se limite aucunement au mode de réalisation de ses différentes parties spécialement décrites, mais elle admet toutes les variantes possibles à condition que celles-ci ne soient pas en contradiction avec l'objet de chacune des revendications annexées à la présente description.

C'est ainsi qu'il peut être adjoint en partie basse une seconde toile dite d'équilibrage. D'autre part, la longueur et la section des tubes, l'importance du tirant d'air et du tirant d'eau peuvent être différents selon que le barrage est affecté aux interventions en mer ou en eau douce, sur les lacs ou les fleuves. De même, les volets prévus sur la partie supérieure des tubes peuvent être remplacés ou doublés par des poches situées sur la toile dans le tirant d'air de celle-ci, lesquelles poches sont disposées l'ouverture dirigée vers le bas.

Le dispositif objet de l'invention peut être utilisé pour toutes les interventions rapides à effectuer pour combattre l'extension de nappes de produits polluants se répandant à la surface des mers, estuaires de fleuves, rivières, et plus particulièrement les nappes de mazout provenant d'avaries de navires pétroliers ou d'opérations de ballastage de ces navires.

## Revendications

1. Barrage vertical destiné à arrêter ou déplacer une nappe d'hydrocarbure flottant sur l'eau et comportant une jupe (1) en matériau souple reliée à des flotteurs (2) allongés munis d'un lest (5) à une de leurs extrémités de façon à flotter verticalement dans l'eau et à maintenir la jupe dans une position verticale, caractérisé en ce que les flotteurs (2) sont reliés les uns aux autres par un moyen de liaison souple (3, 4, 6), indépendant de la jupe (1), et qui, lors d'un remorquage, est tendu alors que la jupe ne l'est pas.

2. Barrage selon la revendication 1, caractérisé en ce que le moyen de liaison souple comprend deux cables (3, 4) situés respectivement en partie haute et basse du flotteur (2).

3. Barrage selon l'une des revendications 1 ou 2, caractérisé en ce que les points de fixation du moyen de liaison sur les flotteurs (2) sont à une distance des extrémités du flotteur au moins égale à la distance séparant deux flotteurs voisins.

4. Barrage selon l'une des revendications 1 à 3, caractérisé en ce que le moyen de liaison souple comprend en outre au moins un croisillon (6) en cables.

5. Barrage selon l'une des revendications 1 à 4, caractérisé en ce que le flotteur (2) est équipé d'un volet de stabilisation (7) capable de prendre, sous l'effet de son poids, une position de repos où il est replié contre le flotteur pour permettre le pliage et, sous une poussée de l'eau, une position active où il est à peu près horizontal et où il s'oppose à un déplacement vertical du flotteur par rapport à l'eau.

6. Barrage selon l'une des revendications 1 à 5, caractérisé en ce que le flotteur (2) est relié à la jupe (1) par des moyens (11) qui permettent le passage de l'eau entre le flotteur et la jupe (1) lors d'un remorquage.

7. Barrage selon l'une des revendications 1 à 6 caractérisé en ce que les flotteurs (2) dépassent notablement vers le bas le bord inférieur de la jupe (1).

8. Barrage selon l'une des revendications 1 à 7, caractérisé en ce que les flotteurs (2) dépassent vers le haut le bord supérieur de la jupe (1).

## Patentansprüche

1. Vertikalsperre für das Aufhalten oder Verschieben einer auf dem Wasser schwimmenden Kohlenwasserstoffschicht une bestehend aus einem Mantel (1) aus Flexiblem Material, der mit langgestreckten Schwimmern (2) verbunden ist, die an einem ihrer Enden mit einem Ballast (5) versehen sind, so daß sie vertikal im Wasser schwimmen und den Mantel in vertikaler Position halten können, dadurch gekennzeichnet, daß die Schwimmer (2) untereinander mit einem flexiblen Mittel (3, 4, 6) unabhängig von dem Mantel (1) Verbindung haben, das beim Abshleppen gespannt wird, während dies für den Mantel nicht zutrifft.

2. Sperre gemäss anspruch 1, dadurch gekennzeichnet, daß das flexible Verbindungsmittel zwei Kabel (3, 4) enthält, die jeweils am oberen und unteren Teil des Schwimmers (2) angeordnet sind.

3. Sperre gemäss einem der Ansprüche 1 oder 2, dadurch gekennzeichnet, daß die Befestigungspunkte des Verbindungsmittels auf den Schwimmern (2) sich in einem Abstand von den Schwimmerenden befinden, der mindest-

ens gleich dem Abstand ist, der zwei benachbarte Schwimmer voneinander trennt.

4. Sperre gemäss einem der Ansprüche 1—3, dadurch gekennzeichnet, daß das flexible Verbindungsmittel außerdem mindestens einen kreuzförmigen Körper (6) aus Kabel umfasst.

5. Sperre gemäss einem der Ansprüche 1—4, dadurch gekennzeichnet, daß der Schwimmer (2) mit einer Stabilisierungsklappe (7) ausgerüstet ist, die unter Einwirkung ihres Gewichts eine Ruhetellung einnehmen kann, in der sie gegen den Schwimmer zurückgeklappt wird, um das Zusammenlegen zu ermöglichen und die unter einem Wasserstoß eine aktive Stellung einnehmen kann, in der sie beinahe horizontal verläuft und in der sie sich einer Vertikalverschiebung des Schwimmers im Verhältnis zum Wasser widersetzt.

6. Sperre gemäß einem der Ansprüche 1—5, dadurch gekennzeichnet, daß der Schwimmer (2) mit dem Mantel (1) durch Mittel (11) verbunden ist, die den Wasserdurchgang zwischen dem Schwimmer und dem Mantel (1) bei einem Abschleppen gestatten.

7. Sperre gemäss einem der Ansprüche 1—6, dadurch gekennzeichnet, daß die Schwimmer (2) wesentlich nach unten über den inneren Rand des Mantel (1) hinausgehen.

8. Sperre gemäss einem der Ansprüche 1—7, dadurch gekennzeichnet, daß die Schwimmer (2) nach oben über den oberen Rand des Mantels (1) hinausgehen.

## Claims

1. Vertical barrier intended to arrest or shift a hydrocarbon layer floating on water and comprising a skirt (1) of flexible material connected to elongate floats (2) provided with a ballast (5) at one end thereof so as to float vertically in water and maintain the skirt in a vertical position, characterized in that the floats (2) are connected to one another by a flexible connecting means (3, 4, 6), independent from the skirt (1), and which, during towing, is taught while the skirt is not so.

2. Barrier according to claim 1, characterized in that the flexible connecting means includes two cables (3, 4) respectively located at the upper and lower portion of the float (2).

3. Barrier according to either of claims 1 or 2, characterized in that the points of attachment of the connecting means on the floats (2) are at a distance from the ends of the float at least equal to the distance between two adjacent floats.

4. Barrier according to any of claims 1 to 3, characterized in that the flexible connecting means moreover includes at least one brace (6) made of cables.

5. Barrier according to any of claims 1 to 4, characterized in that the float (2) is equipped with a stabilizing flap (7) capable of assuming, under the action of its weight, a rest position wherein it is folded up against the float to allow folding and, under water thrust, an operative position wherein it is approximately horizontal and wherein it impedes vertical displacement of the float with respect to the water.

6. Barrier according to any of claims 1 to 5, characterized in that the float (2) is connected to the skirt (1) by means (11) which allow passage of the water between the float and the skirt (1) during towing.

7. Barrier according to any of claims 1 to 6, characterized in that the floats (2) extend downwards substantially beyond the lower edge of the skirt (1).

8. Barrier according to any of claims 1 to 7, characterized in that the floats (2) extend upwards beyond the upper edge of the skirt (1).

_Fig.1_

_Fig.2_

0022 399